# FASCICULE DE BREVET EUROPEEN

(11) **EP 2 776 264 B1**
(45) Date de publication et mention de la délivrance du brevet: **08.04.2020**
(21) Numéro de dépôt: 12795361.0
(22) Date de dépôt: 07.11.2012
(51) Int. Cl.: B60K 15/03, G01F 17/00, G01F 23/00, G01F 25/00

(54) **MÉTHODE DE JAUGEAGE POUR UN RÉSERVOIR À CARBURANT DE VÉHICULE HYBRIDE EN MATIÈRE PLASTIQUE.**
EICHMETHODE FÜR EINEN KRAFTSTOFFBEHÄLTER AUS PLASTIK EINES HYBRIDFAHRZEUGS
METHOD FOR GAUGING A PLASTIC FUEL TANK OF A HYBRID VEHICLE

(30) Priorité: 07.11.2011 EP 11188033
(43) Date de publication de la demande: 17.09.2014
(73) Titulaire: Plastic Omnium Advanced Innovation and Research, 1130 Bruxelles (BE)
(72) Inventeur: CRIEL, Bjorn, B-1750 Sint-martens-lennik (BE); CUVELIER, Vincent, Wuhan, Hubei 430056 (CN)
(74) Mandataire: Remy, Vincent Noel Paul
(86) Numéro de dépôt international: PCT/EP2012/072065
(87) Numéro de publication internationale: WO 2013/068424

(56) Documents cités:
- EP-A1- 2 282 182
- EP-A1- 2 437 036
- WO-A1-2005/103477
- WO-A1-2009/051571
- DE-A1- 10 109 058
- US-A1- 2004 149 271
- US-B1- 7 305 875

## Description

La présente invention concerne une méthode de jaugeage pour un réservoir à carburant de véhicule hybride.

On parle généralement de véhicule hybride dans le cas d'un véhicule associant l'utilisation d'un moteur thermique et d'un moteur électrique.

Il existe un principe général de fonctionnement pour les véhicules hybrides qui consiste à faire fonctionner soit le moteur électrique, soit le moteur thermique, soit les deux en même temps selon les modèles.

Un des principes particuliers est le suivant:
- lors des phases stationnaires (où le véhicule est immobile), les deux moteurs sont à l'arrêt ;
- au démarrage, c'est le moteur électrique qui assure la mise en mouvement de la voiture, jusqu'à des vitesses plus élevées (25 ou 30 km/h) ;
- lorsque des vitesses plus élevées sont atteintes, le moteur thermique prend le relais ;
- en cas de grande accélération, on observe la mise en marche des deux moteurs à la fois, qui permet d'avoir des accélérations équivalentes au moteur de même puissance, voire supérieures ;
- en phase de décélération et de freinage, l'énergie cinétique est utilisée pour recharger les batteries (à noter que cette fonctionnalité n'est pas disponible sur tous les moteurs hybrides disponibles sur le marché à l'heure actuelle).

Il résulte de ce principe que le moteur thermique ne fonctionne pas en permanence et que, dès lors, les phases de purge du canister (filtre à charbon actif qui évite de relarguer à l'atmosphère, des vapeurs de carburant) ne peuvent pas être assurées normalement puisque lors de celles-ci, de l'air éventuellement préchauffé est mis à circuler dans le canister pour le régénérer (c.à.d. pour désorber les vapeurs de carburant qui y sont adsorbées), cet air étant ensuite admis dans le moteur pour y être brûlé.

Dès lors, pour éviter de charger le canister inutilement, on bloque généralement par défaut la communication entre le réservoir et celui-ci ; il en résulte que les réservoirs à carburant de ces véhicules sont généralement mis sous pression (typiquement, à une pression de l'ordre de 300 - 400 mbar), ce qui se fait généralement par un élément fonctionnel situé après les clapets de ventilation, souvent appelé FTIV (Fuel Tank Isolation Valve) et qui empêche la ventilation (dégazage) du réservoir en dehors des situations de remplissage. Cet élément comprend généralement deux soupapes de sécurité (calibrées aux pressions maximales inférieure et supérieure d'utilisation du réservoir) et un pilotage généralement électrique pour pouvoir mettre à pression atmosphérique le réservoir avant remplissage.

Par rapport à leurs homologues métalliques, les réservoirs (ou autres parties des systèmes à carburant) en matière plastique présentent un avantage certain en termes de poids et de facilité de mise en œuvre. Ils présentent toutefois comme inconvénient, le fait que des déformations non négligeables, parfois rémanentes, peuvent y être induites suite à des augmentations/fluctuations de température et de pression, ainsi que suite au vieillissement desdits réservoirs. Ces déformations peuvent induire une erreur importante sur le volume de carburant estimé par les jauges classiques en fonction d'une mesure du niveau de carburant présent dans le réservoir.

Or, il est courant d'équiper les véhicules de capteurs de température, pression... notamment en vue de pouvoir effectuer des tests de détection de fuite (ou «OBD (On Board Diagnosis) leak tests»). On connait également du document EP 2 437 036 une méthode de jaugeage conforme au préambule de la revendication 1.

L'idée à la base de la présente invention est d'utiliser au moins un tel capteur en vue d'estimer la déformation du réservoir et de pouvoir corriger la valeur de jaugeage en conséquence.

La présente invention concerne dès lors une méthode de jaugeage selon la revendication 1.

Dans le cadre de la mise en œuvre de la méthode définie ci-dessus, on obtient une loi de jaugeage, grâce à laquelle on est apte à déterminer le volume exact de carburant présent dans le réservoir. Dans un premier mode de réalisation, cette loi de jaugeage permet de corriger le volume mesuré par la jauge. En d'autres termes, la loi de jaugeage permet d'appliquer un facteur de correction prédéterminé à la mesure de la jauge. Dans un deuxième mode de réalisation cette loi de jaugeage peut être une formule mathématique/table/courbe prédéterminée qui est utilisée pour déterminer le volume de carburant dans le réservoir.

Par «méthode de jaugeage», on entend désigner une méthode pour déterminer la quantité (volume) de carburant présent dans le réservoir. Pour ce faire, la méthode selon l'invention utilise une jauge qui génère de préférence un signal électrique. Cette jauge peut ou non impliquer une pièce mobile. Il peut s'agir d'une jauge avec bras et flotteur, d'une jauge capacitive...

Le carburant auquel est destinée l'invention peut être de l'essence, du diesel, un biocarburant...et peut avoir une teneur en alcool de 0 à 100%.

Le réservoir à carburant selon l'invention est en matière plastique c'est-à-dire qu'il comprend une enceinte en matière plastique définissant un volume de stockage. Cette enceinte est de préférence renforcée, par exemple par un renfort fibreux interne ou externe, par des soudures locales («kiss points»), par un élément renforçant rapporté (sorte de pilier) solidarisant ses parois inférieure et supérieure...

Les matières thermoplastiques donnent de bons résultats dans le cadre de l'invention, notamment en raison des avantages de poids, de résistance mécanique et chimique et de mise en œuvre facilitée, en particulier lorsque les éléments du système présentent des formes complexes.

En particulier, on peut utiliser des polyoléfines, des polyesters thermoplastiques, des polycétones, des polyamides et leurs copolymères. Un mélange de polymères ou de copolymères peut aussi être utilisé, de même qu'un mélange de matières polymériques avec des charges inorganiques, organiques et/ou naturelles comme, par exemple, mais non limitativement : le carbone, les sels et autres dérivés inorganiques, les fibres naturelles ou polymériques. Il est également possible d'utiliser des structures multicouches constituées de couches empilées et solidaires comprenant au moins un des polymères ou copolymères décrits supra.

Un polymère souvent employé pour les réservoirs à carburant est le polyéthylène. D'excellents résultats ont été obtenus avec du polyéthylène haute densité (PEHD).

De préférence, le réservoir auquel est destinée la méthode selon l'invention présente une structure multicouche comprenant au moins une couche de matière thermoplastique et au moins une couche supplémentaire qui peut, de manière avantageuse, être constituée d'un matériau barrière aux liquides et/ou aux gaz.

La présente invention s'applique bien dans le cas de réservoirs à carburant en PEHD ayant une couche barrière en EVOH.

La méthode selon l'invention utilise au moins un capteur pour estimer la déformation du réservoir, le capteur ou au moins un des capteurs étant un compteur de durée de vie du réservoir. De préférence, la méthode utilise en outre au moins un autre capteur dont la mesure (pression, température, durée écoulée depuis un moment donné...) est utilisée sur le véhicule pour une autre fonction que le jaugeage, par exemple pour tester le système à carburant. De manière préférée, la méthode selon l'invention utilise en outre un capteur de pression et/ou un capteur de température. De manière tout particulièrement préférée, la méthode selon l'invention utilise à la fois un capteur de pression, un capteur de température et le compteur de durée de vie.

Le ou les capteurs susmentionnés sont de préférence directement associés au réservoir c'est-à-dire que le capteur de pression, le cas échéant, mesure de préférence la pression dans le réservoir, qu'il en va de même pour le capteur de température, le cas échéant et que le compteur mesure de préférence la durée écoulée depuis le premier remplissage du réservoir.

L'estimation de la déformation du réservoir peut se faire sur base de mesures expérimentales et/ou de simulations numériques. Elle peut impliquer le recours à des tables de calibrage, où des valeurs de déformation sont listées en fonction du ou des paramètres mesuré(s), ou à des courbes ou des formules de calibrage permettant de lire ou de calculer la valeur de la déformation en fonction de ce(s) paramètre(s). A noter que ces tables/courbes/formules dépendent généralement d'autres facteurs tels que la forme du réservoir, la position de la jauge etc.

La méthode selon l'invention est généralement appliquée au système à carburant par un processeur qui peut être intégré à l'ordinateur de bord du véhicule (parfois appelé ECU ou Engine Control Unit), ou par un processeur spécifique au système à carburant (parfois appelé FSCU ou Fuel System Control Unit). Selon cette variante de l'invention, les tables, courbes et/ou formules de calibrage précitées sont stockées dans une mémoire du processeur et au moins un logiciel approprié utilise celles-ci pour corriger la valeur lue par la jauge et calculer avec plus de précision le volume de carburant présent dans le réservoir.

Une architecture électronique privilégiée pourrait être de raccorder les capteurs présents dans le réservoir avec l'ordinateur de bord du véhicule au moyen d'un faisceau électrique. De plus, l'ordinateur de bord du véhicule peut être décomposé en plusieurs entités physiques distinctes (appelés calculateurs ou contrôleurs). Ces entités véhiculent alors de l'information entre elles au moyen de faisceaux électriques contenant des liaisons analogiques, numériques ou des bus de terrain multiplexés (selon les normes CAN, LIN, Flexray, etc.). Ainsi l'intégralité du calcul visant à améliorer la précision du jaugeage peut se trouver répartie sur plusieurs entités communiquant entre elles.

## Revendications

1. Méthode de jaugeage pour un réservoir à carburant en matière plastique monté sur un véhicule hybride, ledit réservoir étant équipé d'une jauge permettant de mesurer le volume de carburant présent dans le réservoir, méthode selon laquelle :
- on effectue une mesure du volume de carburant présent dans le réservoir à l'aide de la jauge ;
- on estime la déformation du réservoir à l'aide d'au moins un capteur embarqué dans le véhicule ; et
- on corrige le volume mesuré par la jauge en fonction de la déformation estimée,
**caractérisé en ce que** le capteur embarqué ou au moins un des capteurs embarqués est un compteur de durée de vie du réservoir.

2. Méthode selon la revendication précédente, dans laquelle le réservoir est en PEHD ou polyéthylène haute densité et comprend une couche barrière en EVOH ou copolymère éthylène-alcool vinylique.

3. Méthode selon l'une quelconque des revendications précédentes, dans laquelle la mesure effectuée par le capteur embarqué est également utilisée sur le véhicule pour une autre fonction que le jaugeage, par exemple pour tester le système à carburant.

4. Méthode selon l'une quelconque des revendications précédentes, utilisant en outre un capteur de pression et/ou un capteur de température.

5. Méthode selon la revendication précédente, utilisant à la fois un capteur de pression, un capteur de température et le compteur de durée de vie.

6. Méthode selon l'une quelconque des revendications précédentes, dans laquelle le capteur est directement associé au réservoir à carburant.

7. Méthode selon l'une quelconque des revendications précédentes, utilisant des tables et/ou des courbes et/ou des formules de calibrage obtenues par des mesures expérimentales et /ou des simulations numériques.

8. Méthode selon la revendication précédente, ladite méthode étant appliquée au système à carburant par un processeur qui peut être intégré à un ordinateur de bord du véhicule ou par un processeur spécifique au système à carburant.

9. Méthode selon la revendication précédente, dans laquelle les tables, courbes et/ou formules de calibrage sont stockées dans une mémoire du processeur et dans laquelle au moins un logiciel approprié utilise celles-ci pour corriger la valeur lue par la jauge et calculer le volume de carburant présent dans le réservoir.

10. Méthode selon la revendication 8 ou 9, selon laquelle le réservoir comprend plusieurs capteurs et selon laquelle on raccorde ces capteurs avec l'ordinateur de bord du véhicule au moyen d'un faisceau électrique.

11. Méthode selon la revendication précédente, dans laquelle l'ordinateur de bord du véhicule est décomposé en plusieurs entités physiques distinctes véhiculant de l'information entre elles au moyen de faisceaux électriques contenant des liaisons analogiques, numériques ou des bus de terrain multiplexés.

## Patentansprüche

1. Pegelmessverfahren für einen Kraftstofftank aus Kunststoff, der in einem Hybridfahrzeug montiert ist, wobei der Tank mit einer Pegelsonde versehen ist, die das Messen des in dem Tank vorhandenen Kraftstoffvolumens ermöglicht, Verfahren, bei dem:
- eine Messung des in dem Tank vorhandenen Kraftstoffvolumens mit Hilfe der Pegelsonde durchgeführt wird;
- die Verformung des Tanks mit Hilfe wenigstens eines an Bord des Fahrzeugs befindlichen Sensors geschätzt wird; und
- das von der Pegelsonde gemessene Volumen in Abhängigkeit von der geschätzten Verformung korrigiert wird,
**dadurch gekennzeichnet, dass** der an Bord befindliche Sensor oder wenigstens einer der an Bord befindlichen Sensoren ein Zähler der Lebensdauer des Tanks ist.

2. Verfahren nach dem vorhergehenden Anspruch, bei dem der Tank aus PEHD oder Polyethylen hoher Dichte verwendet wird und eine Sperrschicht aus EVOH oder Ethylen-Vinylalkohol-Copolymer enthält.

3. Verfahren nach einem der vorhergehenden Ansprüche, bei dem die von dem an Bord befindlichen Sensor durchgeführte Messung ferner in dem Fahrzeug für eine andere Funktion als die Pegelmessung verwendet wird, zum Beispiel, um das Kraftstoffsystem zu prüfen.

4. Verfahren nach einem der vorhergehenden Ansprüche, das ferner einen Drucksensor und/oder einen Temperatursensor verwendet.

5. Verfahren nach dem vorhergehenden Anspruch, das gleichzeitig einen Drucksensor, einen Temperatursensor und den Lebensdauerzähler verwendet.

6. Verfahren nach einem der vorhergehenden Ansprüche, bei dem der Sensor unmittelbar dem Kraftstofftank zugeordnet ist.

7. Verfahren nach einem der vorhergehenden Ansprüche, das Eichungstabellen und/oder -kurven und/oder -formeln verwendet, die durch experimentelle Messungen und/oder durch digitale Simulationen erhalten werden.

8. Verfahren nach dem vorhergehenden Anspruch, wobei das Verfahren auf das Kraftstoffsystem durch einen Prozessor, der in einen Bordcomputer des Fahrzeugs integriert sein kann, oder durch einen für das Kraftstoffsystem spezifischen Prozessor angewendet wird.

9. Verfahren nach dem vorhergehenden Anspruch, bei dem die Eichungstabellen und/oder -kurven und/oder -formeln in einem Speicher des Prozessors abgelegt sind, und bei dem wenigstens eine geeignete Software diese verwendet, um den von der Pegelsonde ermittelten Wert zu korrigieren und das in dem Tank vorhandene Kraftstoffvolumen zu berechnen.

10. Verfahren nach Anspruch 8 oder 9, bei dem der Tank mehrere Sensoren umfasst und bei dem diese Sensoren mit dem Bordcomputer des Fahrzeugs mittels eines Leitungsstranges verbunden sind.

11. Verfahren nach dem vorhergehenden Anspruch, bei dem der Bordcomputer des Fahrzeugs in mehrere verschiedene physikalische Einheiten aufgespalten ist, die Informationen untereinander mit Hilfe von Leitungssträngen transportieren, die analoge Verbindungen, digitale Verbindungen oder Multiplex-Feldbusse enthalten.

## Claims

1. A gauging method for a plastic fuel tank mounted on a hybrid vehicle, said tank being equipped with a gauge that allows the volume of fuel present in the tank to be measured, according to which method:
- the volume of fuel present in the tank is measured using the gauge;
- the deformation of the tank is estimated using at least one sensor carried on board the vehicle; and
- the volume measured by the gauge is corrected on the basis of the estimated deformation,
**characterized in that** the on-board sensor is a working-life meter of the tank.

2. The method as claimed in the preceding claim, in which the tank is made of PEHD or high density polyethylene and comprises a barrier layer of EVOH or ethylene vinyl alcohol copolymer.

3. The method as claimed in either one of the preceding claims, in which the measurement taken by the on-board sensor is also used on the vehicle for some function other than gauging, for example for testing the fuel system.

4. The method as claimed in any one of the preceding claims, further using a pressure sensor and/or a temperature sensor.

5. The method as claimed in the preceding claim, using at once a pressure sensor, a temperature sensor and the working-life meter.

6. The method as claimed in any one of the preceding claims, in which the sensor is directly associated with the fuel tank.

7. The method as claimed in any one of the preceding claims, using calibration tables and/or curves and/or formulae obtained by experimental measurement and/or numerical simulation.

8. The method as claimed in the preceding claim, said method being applied to the fuel system by a processor which may be incorporated into an on-board computer of the vehicle or by a processor specific to the fuel system

9. The method as claimed in the preceding claim, in which the calibration tables, curves and/or formulae are stored in a memory of the processor and in which at least one suitable software package uses these to correct the value read by the gauge and to calculate the volume of fuel present in the tank.

10. The method as claimed in claim 8 or 9, whereby the tank comprises several sensors and whereby these sensors are connected to the vehicle on-board computer using an electrical network.

11. The method as claimed in the preceding claim, in which the vehicle on-board computer is broken down into several distinct physical entities carrying information between them using electrical networks containing analog connections, digital connections or field buses which are multiplexed.
